# EUROPEAN PATENT APPLICATION

(11) **EP 4 817 403 A1**
(43) Date of publication of application: **07.10.2026**
(21) Application number: 26168772.7
(22) Date of filing: 27.03.2026
(51) Int. Cl.: A01G 9/08, A01D 46/30, A01G 9/14

(54) **AUTOMATED SYSTEM FOR AGRICULTURAL AREAS**

(30) Priority: 01.04.2025 IT 202500006948
(71) Applicant: Aquaponic Design S.r.l., 40122 Bologna (IT)
(72) Inventor: LOMBARDO, Francesco, 40138 BOLOGNA (IT); SETTANNI, Luca, 40134 BOLOGNA (IT); TAMBORRA, Gian Marco, 40026 SESTO IMOLESE (BOLOGNA) (IT)
(74) Representative: Milli, Simone

(57) **Abstract**

An automated system (100) for agricultural areas is provided, comprising a robot (1) having at least one visual acquisition device (2) configured to acquire at least one image representing a cultivated area (3), gripping means (4) configured to move at least one plant (6) or a product of a plant (6) in the cultivated area (3) and a control unit (5) operatively connected to the visual acquisition device (2) and to the gripping means (4). The control unit (5) is configured to receive at least one image representing a cultivated area (3) from the visual acquisition device (2). The control unit (5) is configured to carry out at least one of the following operations: a first operation and a second operation. The first operation comprises the processing of the at least one image received to identify an available area (3a) in the cultivated area (3) and the activation of the gripping means (4) to grip a plant (6) and position it in the available area (3a) of the cultivated area (3). The second operation comprises the processing of the at least one image received to evaluate the ripeness of a product of the plant (6).

## Description

The present invention relates to an automated system for agricultural areas.

The present invention is applied to the field of precision agriculture and agricultural automation, in particular to the context of the systems for automated management of agricultural areas, as for example greenhouses, cultivated fields or plant nurseries.

Traditionally, the cultivated areas are managed by using semiautomatic machineries that require a direct and continuous control by at least an operator.

In fact, the semiautomatic machineries are designed to simplify and speed up the procedures, but their real efficacy depends partially on the skills of the operator and on his capacity to adapt to the conditions of the cultivated area.

It is known that the efficiency of the semiautomatic machineries is also strongly influenced by the experience of the operator, who has to control and adjust the machinery according to the specific conditions of the cultivated area and its crops.

So, the functioning of the semiautomatic machineries is limited since they depend on the parameters set up and controlled by the operator.

The operating parameters an operator is asked to adjust and monitor are for example sowing depth, plant spacing, quantity and time of water and fertilizers distribution.

The operator experience has also a crucial role in harvesting, since ripe fruits have to be identified and picked manually by the operator, who has then to position them on conveyor belts.

In the irrigation instead, the operator has to know how to measure out water according to the plants specific needs and the soil conditions of the cultivated area.

The technical purpose of the present invention is to provide an automated system which allows to carry out automated agricultural operations while reducing human intervention.

Aim of the present invention is to provide an automated system for agricultural areas which allows to improve cultivation, plants management in the agricultural area and harvest in a cultivated area.

Another aim of the present invention is to provide an automated system which allows to carry out operations in an autonomous, precise and effective manner while reducing human workload.

The technical purpose and the prefixed aims are reached by an automated system which can be dynamically adapted to the cultivated areas conditions and is able to process data in real time and so to take decisions, also with no operator, in order to maximize crops yield reducing waste.

The prefixed aims are fully reached by the present invention that is characterised by the appended claims.

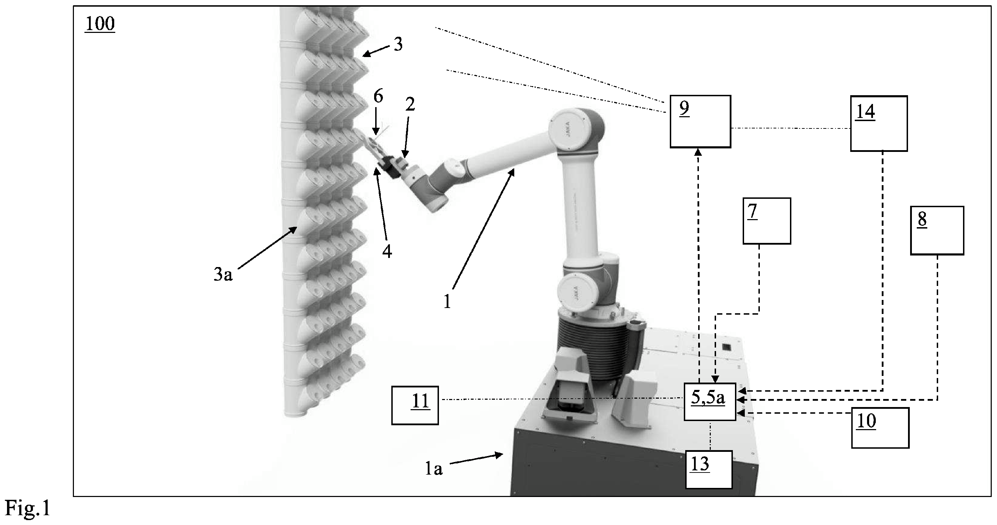

The technical features of the invention and its advantages will be clearer from the following detailed description, which is referred to the appended drawing that represents a purely illustrative and not limiting embodiment. Figure 1 shows schematically a total view of an embodiment of the automated system, object of the present invention. According to the present description, the automated system 100 is designed for the automated management of agricultural areas, as for example greenhouses, cultivated areas or plant nurseries.

According to the described embodiment, the automated system 100 is designed to function in vertical farming installations.

For simplicity, in the following description the automated system 100 is referred to as system 100.

The system 100 comprises a robot 1. The robot 1 is arranged on a mobile base 1a.

The mobile base 1a is realized in aluminium alloy. The mobile base 1a is preferably realized in aircraft-grade aluminium to reduce its weight and to guarantee its corrosion resistance. The mobile base 1a of the robot 1 is provided with a movement system on motorized linear guides. The motorized linear guides allow the robot 1 to carry out horizontal and vertical translations along the cultivated area 3.

The robot 1 has at least a visual acquisition device 2.

According to an aspect of the present description, the visual acquisition device 2 comprises a RGB and NIR multispectral camera. The RGC and NIR multispectral camera is a device able to acquire images of different bands of the electromagnetic spectrum, in particular in the visible (RGB) and infrared (NIR) spectra. Such camera is configured to combine information coming from these bands and to provide more detailed images in comparison to a traditional camera.

The at least one visual acquisition device 2 is configured to acquire at least an image representing a cultivated area 3.

With cultivated area 3 it is intended a portion of the whole vertical cultivation installation.

The robot 1 comprises gripping means 4. According to an embodiment, the gripping means 4 are realized as gripping pliers.

The gripping means 4 are configured to (take and) move at least a plant 6 in the cultivated area. The gripping means 4 are configured to move at least a product of a plant 6 in the cultivated area 3. The gripping means 4 comprise tactile pressure sensors, so that once a product is gripped, it is not damaged. In other words, tactile sensors allow to adjust the correct gripping force of the gripping means 4 in order to avoid the plant 6 and/or plant product damaging.

The robot 1 comprises a motor and a plurality of actuators (preferably high precision actuators).

High precision actuators allow to actuate the gripping means 4 so to avoid gripping means 4 positioning errors.

Moreover, the gripping means 4 comprise special attachments for plants 6 products harvesting or for phytosanitary treatment.

According to another aspect of the present description, the robot 1 comprises movement and speed transducers used by the system 100 to detect the gripping means 4 angular position in real time.

Moreover, the robot 1 comprises LIDAR sensors configured to determine the spacing of an object or a surface by using a laser pulse. Advantageously, the LIDAR sensors are used to carry out a precise mapping of the cultivated area 3.

Once the mapping of the cultivated area 3 is carried out, it is possible to identify the available areas 3a where it is possible to position a plant 6. The LIDAR sensors are used to move the gripping means 4 precisely inside such cultivated area 3.

The robot 1 comprises a control unit 5. The control unit 5 is operatively connected to the visual acquisition device 2 and to the gripping means 4. The control unit 5 is configured to receive at least an image representing the cultivated area 3, from the visual acquisition device 2.

The control unit 5 is configured to carry out at least one of a first and a second operation.

The first operation provides to process at least a received image to identify an available area 3a in the cultivated area 3 and to activate the gripping means 4 to grip a plant 6 and to position it in the available area 3a of the cultivated area 3.

According to another aspect of the present description, the control unit 5 is configured to activate the gripping means 4 to grip a plant 6 and to control the gripping means 4 to move it between a first position and a second position in the cultivated area 3.

The second position corresponds to the previously identified available area 3a.

The control unit 5, by means of the actuators and the tactile sensors, adjusts the force applied by the gripping means 4, preferably according to the features and/or the dimensions of the plant 6.

Advantageously, such force modulation allows to carry out its transplantation and manipulation in an automated manner.

The second operation comprises the processing of at least a received image to evaluate the ripeness of a plant 6 product.

The control unit 5 is configured to plan a (an optimal) path for picking a product of the plant 6 of the cultivated area 3. The definition "optimal path for picking a product" is referred to the path that the gripping means 4 have to cover to reach the product to be picked, reducing the number of useless movements and the needed working time.

In other words, the control unit 5 is configured to process a path that the gripping means 4 have to cover to reach the product to be picked.

The control unit 5 is configured to activate the gripping means 4 and to pick a product of the plant 6. In other words, the control unit 5 is configured to activate and move the gripping means 4.

The system 100 comprises at least a temperature sensor 7 and/or a humidity sensor 8.

The temperature sensor 7 is operatively connected to the control unit 5. The humidity sensor 8 is operatively connected to the control unit 5. The temperature sensor 7 and/or the humidity sensor 8 allow to carry out a periodic scan of the cultivated area 3. The temperature sensor 7 and/or the humidity sensor 8 allow to detect a temperature and/or humidity variation of the cultivated area 3.

Moreover, the system 100 comprises sensors configured to detect a parameter regarding the level of nutrients, for example present in the soil of the cultivated area 3.

The robot 1 comprises at least a coupling configured to be alternately coupled to an end tool.

The robot 1 comprises at least a coupling configured to be alternately coupled to a plurality of end tools.

The robot 1 comprises at least a coupling configured to be alternately coupled to pliers, to a nozzle and a sensor.

The control unit 5 comprises an artificial intelligence module 5a.

The artificial intelligence module 5a is implemented by means of a neural network.

The artificial intelligence module 5a comprises at least an input configured to receive information relating to an image acquired by the visual acquisition device 2.

The artificial intelligence module 5a has one or more of the following data as output: a ripeness level of a plant 6 product, the identification of a plant 6 with a disease and the plant 6 coordinates in the cultivated area 3.

The artificial intelligence module 5a is pre-trained by means of images.

The artificial intelligence module 5a is pre-trained by means of images containing a representation of a healthy plant 6 and images containing the representation of a plant 6 with a disease.

The artificial intelligence module 5a is configured to detect if a healthy plant 6 is present in the acquired image, based on the images received during training.

The artificial intelligence module 5a is configured to detect if a plant 6 with a (plant) disease is present in the acquired image.

Once received in input the image representing the cultivated area 3, the artificial intelligence module 5a determines if the at least one plant 6 is healthy or has a plant disease, based on the training received.

Once the artificial intelligence module 5a has determined the condition of the plant 6, the control unit 5 identifies the operation to be carried out.

According to another aspect of the present description, the artificial intelligence module 5a is pre-trained by means of images containing a representation of a ripe product of the plant 6.

The artificial intelligence module 5a is pre-trained by means of images containing a representation of a product in different times of ripeness.

In fact, once received in input the image representing a plant 6 with products, the artificial intelligence module 5a evaluates the product ripeness level, based on the training received.

The artificial intelligence module 5a comprises image processing algorithms for filtering, noise reduction and contrast enhancement.

Once the artificial intelligence module 5a has determined the product ripeness level, the optimal path is planned for picking the product of the plant 6.

According to another aspect of the present description, the artificial intelligence module 5a uses heuristic algorithms to identify the more efficient path to reach a target.

In other words, the artificial intelligence module 5a uses heuristic algorithms to identify the more efficient path for the gripping means 4 to reach the plant 6.

Advantageously, the heuristic algorithms are aimed at reaching a target maximizing the efficiency of the operations and minimizing, consequently, the system costs (for example in terms of energy consumption).

Maximizing the efficiency means that the algorithm allows to optimize the use of resources (time, energy, materials) to obtain the best possible result with minimum resources waste.

Minimizing the costs implies instead that the algorithm allows to reduce to the minimum the costs needed to reach a target, as energy consumption and equipment wear.

Once the gripping means 4 have reached the position of the product of the plant 6 in the cultivated area 3, the product is picked.

The gripping means 4 comprise a plurality of pressure sensors, preferably positioned at the gripping pliers. The pressure sensors allow to adjust dynamically the pressure exerted by the pliers, avoiding that the product is damaged.

According to another aspect of the present description, the artificial intelligence module 5a uses a paradigm, i.e. an automatic learning model that allows it to learn to take decisions based on the interaction with the work environment, in particular with the cultivated area 3.

The artificial intelligence module 5a is configured to use a reinforcement learning network.

Advantageously, the artificial intelligence module 5a is designed to improve its decisional capacity over time optimizing the operations that it has to carry out based on the specific conditions of the cultivated area 3.

The system 100 comprises a virtual training module that simulates the cultivated area 3 to improve, even remotely, the decisional capacity of the artificial intelligence module 5a.

The system 100 comprises a loT (Internet of things) module 13 operatively connected to the control unit 5.

The loT module 13 is configured to collect data relating to the cultivated area 3.

The loT module 13 is configured to send the data relating to the cultivated area 3 in a remote storage space.

The system 100 according to the present description comprises a control panel accessible via browser or remote app.

The control panel is configured to visualize, preferably in real time, the operational data of the system 100 and is configured to activate the remote control allowing the users to monitor, intervene or re-configure the system 100.

The system 100 according to the present description and the appended figure comprises a chemical treatment device 9.

The chemical treatment device 9 is operatively connected to the control unit 5.

According to another aspect of the present description, the artificial intelligence module 5a is configured to determine if a determined plant 6 in the cultivated area 3 has a plant disease.

The artificial intelligence module 5a is configured to determine the presence of a kind of plant disease on the plants 6.

The robot 1 comprises at least a tank 14 (preferably a plurality of tanks 14) containing a treatment to be delivered on the plants 6.

The control unit 5 is configured to select the tank 14 from which the chemical treatment device 9 takes the treatment to be delivered on the plants 6.

The chemical treatment device 9 takes the treatment to be delivered on the plants 6 from the tank 14.

The control unit 5 is configured to select the tank 14 from which the chemical treatment device 9 takes the treatment to be delivered on the plants 6 based on the kind of plant disease present on the plants 6.

So, the artificial intelligence module 5a is configured to activate the chemical treatment device 9, once the artificial intelligence module 5a has determined that the plant 6 in the cultivated area 3 has a plant disease.

Therefore, the artificial intelligence module 5a is configured to activate the chemical treatment device 9 that delivers a treatment on the plants 6 in the cultivated area 3.

The artificial intelligence module 5a controls the chemical treatment device 9 to apply specific substances (as fertilizers, pesticides or plant protection products) on the plants 6 in the cultivated area 3.

The artificial intelligence module 5a processes at least an input to decide when, where and how much treatment is to be delivered by means of the treatment device 9.

According to an aspect of the present description, the treatment device 9 delivers the treatment on the single plant 6 of the cultivated area 3.

According to a different aspect of the present description, the treatment device 9 is realized in the form of a continuous duct extending along the whole surface of the cultivated area 3 and designed to deliver the treatment uniformly on the cultivated area 3.

According to an illustrative aspect of the present description, the treatment device 9 comprises a network of nebulization ducts positioned along the cultivated area 3.

The nebulization ducts are provided with nozzles that release chemical substances (as fertilizers, pesticides or water) as very fine mist, thus guaranteeing a homogeneous distribution on all the plants of the cultivated area 3.

The control unit 5 is configured to control the flow and/or the times of the treatment delivering based on the data in output at the artificial intelligence module 5a.

Advantageously, the system 100 object of the present description allows to carry out operations of the whole cultivated area 3 in an efficient manner, guaranteeing that each plant 6 receives a predetermined quantity of treatment, i.e. the treatment needed quantity.

The system 100 comprises a memory 10. In the memory 10 information is stored relating to the treatments delivered to the plants 6 in the cultivated area 3.

The memory 10 of the system 100 guarantees the traceability of the operations carried out by the robot 1 on the cultivated area 3.

This allows the system 100 to respect the current agrifood regulations by providing (by means of the information stored in the memory 10) accessible and verifiable data to guarantee compliance and safety in the cultivation operations of the cultivated area 3.

The system 100 comprises a user interface 11. By means of the user interface 11 an operator can monitor the functioning of the robot 1 remotely.

According to another aspect of the present description, by means of the user interface 11 an operator can modify the sequence of the operations carried out by the robot 1 depending on particular needs.

Advantageously, the system 100 object of the present invention allows to simplify and speed up the operations to be carried out on the cultivated area 3.

Advantageously, the system 100 object of the present invention allows to carry out automatically the operations to be carried out on the cultivated area 3.

## Claims

1. An automated system (100) for agricultural areas comprising a robot (1) having:
- at least one visual acquisition device (2) configured to acquire at least one image representing a cultivated area (3);
- gripping means (4) configured to move at least one plant (6) or a product of a plant (6) in the cultivated area (3);
- a control unit (5) operatively connected to said visual acquisition device (2) and to said gripping means (4) and configured to receive at least one image representing a cultivated area (3) from the visual acquisition device (2);
the system (100) being **characterised in that** the control unit (5) is configured to carry out at least one of the following operations:
- a first operation comprising:
- the processing of the at least one image received to identify an available area (3a) in the cultivated area (3);
- the activation of the gripping means (4) to grip a plant (6) and position it in the available area (3a) of the cultivated area (3);
- a second operation comprising:
- the processing of the at least one image received to evaluate the ripeness of a product of the plant (6).

2. The system (100) according to the preceding claim, wherein the control unit (5) is configured to plan an optimal path for picking a product of the plant (6) present in the cultivated area (3).

3. The system (100) according to any one of the preceding claims, wherein the control unit (5) is configured to activate the gripping means (4) and to pick a product of the plant (6).

4. The system (100) according to any one of the preceding claims, wherein the control unit (5) is configured to activate the gripping means (4) to grip a plant (6) and move it between a first position and a second position in the cultivated area (3), wherein the second position corresponds to the identified available area (3a).

5. The system (100) according to any one of the preceding claims, comprising at least a temperature sensor (7) and/or a humidity sensor (8) operatively connected to the control unit (5).

6. The system (100) according to any one of the preceding claims, wherein the control unit (5) comprises an artificial intelligence module (5a) implemented by means of a neural network.

7. The system (100) according to the preceding claim, wherein the artificial intelligence module (5a) comprises at least one input configured to receive information relating to an image acquired by the visual acquisition device (2).

8. The system (100) according to any one of the preceding claims, wherein the artificial intelligence module (5a) is configured to identify in said acquired image the presence of a plant disease of the plant (6).

9. The system (100) according to any one of the preceding claims, wherein the artificial intelligence module (5a) is pre-trained by means of images containing a representation of a healthy plant and by means of images containing the representation of a plant with a disease.

10. The system (100) according to any one of the preceding claims, wherein the artificial intelligence module (5a) is configured to detect if a healthy plant is present in the image acquired, based on the images received during training.

11. The system (100) according to any one of the preceding claims, wherein the artificial intelligence module (5a) is configured to use a reinforcement learning network.

12. The system (100) according to any one of the preceding claims, comprising a chemical treatment device (9) operatively connected to the control unit (5).

13. The system (100) according to any one of the preceding claims, comprising an loT module (13) operatively connected to the control unit (5) and configured to collect data relating to the cultivated area (3).

14. The system (100) according to any one of the preceding claims, wherein the artificial intelligence module (5a) is configured to activate the chemical treatment device (9) which delivers a treatment on the plants (6) in the cultivated area (3).

15. The system (100) according to any one of the preceding claims, wherein the robot (1) comprises at least one tank (14) containing a treatment to be delivered on the plants (6) and the control unit (5) is configured to select the tank (14) from which the chemical treatment device (9) takes the treatment to be delivered.

16. The system (100) according to any one of the preceding claims, comprising a memory (10) in which the treatments are saved, delivered to the plants (6) in the cultivated area (3).

17. The system (100) according to any one of the preceding claims, comprising a user interface (11) by means of which a user controls the robot (1).

18. The system (100) according to any one of the preceding claims, wherein the robot (1) comprises at least one coupling configured to be alternately coupled to an end tool.
